(19) Europäisches Patentamt
European Patent Office
Office européen des brevets

(11) Veröffentlichungsnummer: **0 021 331**
**B1**

# (12) EUROPÄISCHE PATENTSCHRIFT

(45) Veröffentlichungstag der Patentschrift: **26.05.82**

(51) Int. Cl.³: **C 01 B 17/45**

(21) Anmeldenummer: **80103379.6**

(22) Anmeldetag: **18.06.80**

(54) **Verfahren zur Herstellung von Schwefeltetrafluorid.**

(30) Priorität: **25.06.79 DE 2925540**

(43) Veröffentlichungstag der Anmeldung: **07.01.81 Patentblatt 81/1**

(45) Bekanntmachung des Hinweises auf die Patenterteilung: **26.05.82 Patentblatt 82/21**

(84) Benannte Vertragsstaaten: **CH DE FR GB IT LI NL**

(56) Entgegenhaltungen:
**DE-A-2363679**
**DE-A-2629364**
**DE-A-2823969**
**ANGEWANDTE CHEMIE, Band 74, Nr. 19, 1962 Weinheim W.C. SMITH «Chemie des Schwefeltetrafluorids» Seiten 742 bis 752**

(73) Patentinhaber: **HOECHST AKTIENGESELLSCHAFT, Postfach 80 03 20, D-6230 Frankfurt/Main 80 (DE)**

(72) Erfinder: **Franz, Raimund, Dr., Johann-Strauss-Strasse 36, D-6233 Kelkheim (Taunus) (DE)**

EP 0 021 331 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von Schwefeltetrafluorid

Schwefeltetrafluorid $SF_4$ is ein wertvolles Agens zur Herstellung anorganischer und insbesondere organischer Fluorverbindungen; mit Hilfe von $SF_4$ ist es z.B. möglich, in einer Vielzahl von anorganischen und organischen Verbindungen Sauerstoff- und Schwefelatome selektiv durch Fluor zu ersetzen [siehe den Übersichtsartikel «Chemie des Schwefeltetrafluorids» von W.C. Smith in Angew. Chem. 1962, *74* (19), 742 bis 751]. Die so erhaltenen Fluorverbindungen sind teils Zwischen-, teils Endprodukte auf verschiedenen Sachgebieten, insbesondere auf dem Pflanzenschutz- und Pharmasektor.

Obwhol bereits eine Reihe verschiedener Methoden zur Herstellung des $SF_4$ bekannt ist, ist es wegen des dabei erforderlichen teilweise erheblichen Aufwands bisher kaum möglich, $SF_4$ in technischem Massstab wirtschaftlich herzustellen, was in dem immer noch ziemlich hohen Preis des $SF_4$ zum Ausdruck kommt. Daher wohl hat das $SF_4$ bislang auch noch keinen breiteren Eingang in die Technik gefunden.

Die bis zum Jahr 1962 bekannten Verfahren zur Herstellung des $SF_4$ dürften in dem eingangs erwähnten Artikel von W.C. Smith a.a.O. im wesentlichen beschrieben sein; auch die entsprechende Primärliteratur ist dort angegeben.

Das — allerdings wohl nur theoretisch — einfachste Verfahren zur Herstellung des $SF_4$ besteht in der Einwirkung von elementarem Fluor auf elementaren Schwefel bei −75°C. Wegen der Notwendigkeit des Arbeitens mit dem ausserordentlich aggressiven elementarem Fluor ist hier jedoch ein erheblicher apparativer Aufwand erforderlich, welcher einer wirtschaftlichen Durchführung des Verfahrens im Wege steht. Als gängigste Methode zur Darstellung von $SF_4$ werden in dem Artikel von W.C. Smith a.a.O. Fluorierungen von Schwefel oder schwefelhaltigen Verbindungen mit Metallfluoriden — insbesondere mit Alkalimetallfluoriden — angegeben. Demnach wird entweder Schwefel oder eine schwefelhaltige Verbindung wie z.B. $SCl_2$ mit elementarem Chlor und z.B. NaF oder $SCl_2$ mit z.B. NaF in einem inerten Reaktionsmedium von hoher Dielektrizitätskonstante — insbesondere in Acetonitril — zur Reaktion gebracht.

Auch diese Methoden sind jedoch nicht frei von Nachteilen. Sie erfordern den Einsatz eines absolut trockenen, feinpulvrigen NaF mit definiertem Korngrössenbereich (vgl. Organic Reactions 1974, *21*, 55 bis 57); NaF dieser Qualität ist jedoch ziemlich kostspielig. Ausserdem ist das Reaktionsgemisch hier heterogen; um die Reaktion in vertretbarer Zeit ablaufen zu lassen, muss bei erhöhter Temperatur gearbeitet werden, was die Spaltung des $SCl_2$ in $S_2Cl_2$ und $Cl_2$ begünstigt. Das dabei entstehende Chlor is aus dem Produkt nur schwer zu entfernen. Dasselbe gilt für das bei Zutritt von Feuchtigkeitsspuren entstehende — wenn auch harmlosere — Thionylfluorid $SOF_2$. Die Ausbeuten an $SF_4$ übersteigen bei diesen Verfahrensweisen 60% d.Th. kaum.

Einige neuere Methoden zur Herstellung des $SF_4$ bedienen sich für die Fluorierung von Schwefelchloriden des Fluorwasserstoffs als solchem oder in komplexgebundener Form.

So wird nach dem in der DE-A 2363679 beschriebenen Verfahren $SCl_4$ oder ein Gemisch aus $SCl_2$ und $Cl_2$ in Gegenwart von Tetrahalogenmethan — vorzugsweise von $CCl_4$ — mit HF umgesetzt; die Umsetzung wird vorzugsweise in einem Lösungsmittel wie Methylenchlorid, Chloroform, Acetonitril etc. vorgenommen und der gebildete Chlorwasserstoff sowie eventuell überschüssiger Fluorwasserstoff wird am Ende der Reaktion durch den Zusatz der entsprechenden Menge einer Base wie Triäthylamin oder Pyridin gebunden.

Nach einem anderen Verfahren (DE-A 2629264) wird unter wasserfreien Bedingungen $SCl_2$ mit NOF und/oder einem NOF/HF-Komplex bei einer Temperatur oberhalb des Schmelzpunkts der am höchsten schmelzenden dieser Verbindungen in dem Reaktionspartnergemisch umgesetzt.

Wieder ein anderes Verfahren benutzt für die Fluorierung des $SCl_2$ ein 70 Gew.% Fluorwasserstoff enthaltendes Pyridin-polyhydrofluorid (G.A. Olah, Inorg. Chem. 1977, 2637); die Reaktionstemperatur beträgt 45°C; als Lösungsmittel dienen — wie auch etwa bei den vorerwähnten Fluorierungen mit Metallfluoriden — Lösungsmittel mit hoher Dielektrizitätskonstante wie z.B. Acetonitril.

Die sich des Fluorwasserstoffs bedienenden Methoden sind geprägt von den Erfordernissen, die sich aus der Verwendung des stark ätzenden Fluorwasserstoffs ergeben, und damit entsprechend unbequem und aufwendig. Dies gilt auch für das letztgenannte Pyridin-Polyhydrofluorid, das selbst ähnlich korrosiv ist wie reiner Fluorwasserstoff und sich ab etwa 50°C zersetzt.

Es wurde auch bereits vorgeschlagen, die Hydrofluoride organischer Stickstoffbasen, insbesondere von sekundären und tertiären aliphatischen Aminen, zur Herstellung organischer Fluorverbindungen aus den entsprechenden Chlor-, Brom- oder u.U. auch Iod-Verbindungen zu verwenden (DE-A-2823969). Für die Herstellung anorganischer Fluorverbindungen wurden die Hydrofluoride aliphatischer Amine jedoch noch nicht vorgeschlagen oder beschrieben.

In dem Bestreben, ein gegenüber den bekannten Verfahren verbessertes Verfahren zur Herstellung von $SF_4$ zu entwickeln, wurde nun in Weiterverfolgung der Arbeiten gemäss DE-A-2823969 gefunden, dass sich $SF_4$ durch Umsetzung von $SCl_2$ mit einem Amin-Polyhydrofluorid in einem inerten aprotischen Lösungsmittel in bequemer Weise bei niedrigen Temperaturen herstellen lässt, wenn man als Aminpolyhydrofluorid ein Trishydrofluorid eines tertiären Amins der nach stehenden Formel I verwendet.

Das ausgezeichnete und problemlose Gelingen dieser Reaktion war überraschend, weil die Trishydrofluoride tertiärer Amine bedeutend stabiler

sind als das von Olah a.a.O. verwendete Pyridin-Polyhydrofluorid und folglich zu erwarten gewesen wäre, dass die Trishydrofluoride tertiärer Amine langsamer oder erst bei höheren Reaktionstemperaturen als das genannte Pyridin-Polyhydrofluorid reagieren. Gerade das Gegenteil ist jedoch der Fall, so dass die Reaktion hier ohne die Schwierigkeiten durchführbar ist, welche bei den bekannten Methoden auftreten.

Unter Trishydrofluorid eines tertiären Amins sind solche Trishydrofluoride tertiärer aliphatischer Amine zu verstehen, welche unter die folgende allgemeine Formel I fallen:

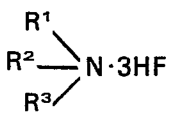

(I)

worin $R^1$, $R^2$ und $R^3$ unabhängig voneinander = $(C_1$-$C_{10})$-Alkyl, $(C_3$-$C_7)$-Cycloalkyl oder $(C_3$-$C_{10})$-Aralkyl, wobei 2 dieser Reste $R^1$, $R^2$ und $R^3$ zusammen auch eine — gegebenenfalls durch Heteroatome (hauptsächlich O und/oder S) unterbrochene — Alkylengruppe mit 4-6 C-Atomen in der Kette bilden können.

Vorzugsweise sind die Reste $R^1$, $R^2$ und $R^3$ gleiche oder verschiedene $(C_1$-$C_4)$-Alkylgruppen oder 2 dieser Reste eine Alkylengruppe mit 5 C-Atomen in der Kette und der übrige Rest eine $(C_1$-$C_4)$-Alkylgruppe.

Konkrete unter die Formel I fallende Trishydrofluoride sind beispielsweise: Trimethylamin-trishydrofluorid, Triäthylamin-trishydrofluorid, Tri-n-propylamin-trishydrofluorid, Äthyl-diisopropylamin-trishydrofluorid, Tri-n-butylamin-trishydrofluorid, Tri-n-octylamin-trishydrofluorid, N,N-Dimethyl-N-cyclohexylamin-trishydrofluorid, N,N-Diäthyl-N-benzylamin-trishydrofluorid, N-Methylpiperidin-trishydrofluorid, N-Äthylmorpholintrishydrofluorid etc. Für das erfindungsgemässe Verfahren besonders bevorzugtes Trishydrofluorid ist Triäthylamin-trishydrofluorid. Selbstverständlich kann auch ein Gemisch aus 2 oder mehreren der genannten Trishydrofluoride verwendet werden.

Die genannten Trishydrofluoride sind aus den Komponenten (tertiäres Amin + Fluorwasserstoff) leicht herstellbare, stabile, lagerfähige, bei Raumtemperatur meist flüssige Komplexverbindungen, die in Apparaturen aus Borsilikatglas vakuumdestillierbar sind. Es ist möglich, die Trishydrofluoride für das erfindungsgemässe Verfahren sowohl in fertigem Zustand einzusetzen als auch erst in situ zu erzeugen. Zwecks Erzeugung in situ wird zu einer Lösung von Fluorwasserstoff in dem für die Umsetzung verwendeten inerten aprotischen Lösungsmittel — einen üblichen inerten aprotischen Lösungsmittel hoher Dielektrizitätskonstante wie z.B. Acetonitirl — die berechnete Menge tertiäres Amin hinzugefügt. Das molare Verhältnis des inerten aprotischen Lösungsmittels zu dem Amin-trishydrofluorid ist in weiten Grenzen variierbar; zweckmässig ist jedoch die Einhaltung eines Verhältnisses von 2:1 bis 4:1, vorzugsweise eines solchen von 3:1.

Wenn für das erfindungsgemässe Verfahren ein Amin-trishydrofluorid der Formel I verwendet wird, lässt sich die dem Verfahren zugrundeliegende Reaktion durch folgende Gleichung widergeben:

$$4\ R^1R^2R^3N \cdot 3HF$$

$$+\ 3\ SCl_2 \xrightarrow[\text{vorz. } CH_3CN)]{\text{(aprot. Lösungsmittel,}} SF_4 + S_2Cl_2$$

$$+\ 4\ R^1R^2R^3N \cdot HCl + 8\ HF$$

Das Verfahren wird vorteilhaft so durchgeführt, dass man das Schwefeldichlorid zu der Lösung des tertiären Amin-trishydrofluorids in einem inerten aprotischen Lösungsmittel, vorzugsweise in Acetonitril, zutropft.

Da die Reaktionskomponenten Schwefeldichlorid und Amin-trishydrofluorid sowie das inerte aprotische Lösungsmittel homogen miteinander mischbar sind, kann die Reaktion bei relativ tiefen Temperaturen — d.h. bei Temperaturen, welche die Raumtemperatur kaum übersteigen — durchgeführt werden. So lässt sich als allgemeiner Temperaturbereich der Bereich zwischen −10 und +25°C angeben; bevorzugt sind Temperaturen zwischen 0 und +15°C, insbesondere zwischen +5 und +10°C. Temperaturen über +25°C sind möglich, bringen jedoch keine Vorteile.

Nach beendeter Reaktion wird aus dem Reaktionsgemisch das Schwefeltetrafluorid ohne Temperaturerhöhung durch Anlegen von Vakuum gewonnen. Zur Kondensation dient eine Vorlage, die je nach der Stärke des angelegten Vakuums auf eine Temperatur abgekühlt wird, die zur verlustfreien Kondensation des Schwefeltetrafluorids (Siedepunkt bei Normaldruck −38°C) ausreicht. Die Verwendung von flüssigem Stickstoff zum Kühlen der Vorlage ist vorteilhaft. Die weitere Reinigung des so gewonnenen rohen Schwefeltetrafluorids kann in an sich bekannter Weise z.B. durch Tieftemperaturdestillation bei Normaldruck erfolgen.

Der Reaktionsrückstand besteht aus einer klaren, orangegefärbten Flüssigkeit, die ausser dem Lösungsmittel im wesentlichen Amin-hydrochlorid, Dischwefeldichlorid sowie Fluorwasserstoff enthält. Der grösste Teil dieser Stoffe kann, wenn gewünscht, durch einfache Massnahmen wiedergewonnen und der Reaktion wieder zugeführt werden. So lassen sich durch Verbessern des Vakuums bei Raumtemperatur oder wenig darüber die flüchtigen Anteile des Reaktionsrückstandes herausdestillieren. Aus dem zweiphasigen Destillat gewinnt man durch Scheiden einerseits bis zu etwa 90% des eingesetzten aprotischen Lösungsmittels mit gelöstem Fluorwasserstoff und Dischwefeldichlorid zurück, die sich für die gleiche Reaktion wiedereinsetzen lassen; andererseits ergibt die Scheidung einen grossen Teil des entstandenen Dischwefeldichlorids, das der Wiederchlorierung zu Schwefeldichlorid

unterworfen werden kann. Durch Aufarbeiten des Eindampfrückstandes etwa mit Natronlauge oder Kalkmilch können über 90% des im verwendeten Trishydrofluorid enthaltenden tertiären Amins wiedergewonnen werden.

Nach dem erfindungsgemässen Verfahren erhält man ein farbloses, praktisch chlorfreies Schwefeltetrafluorid in Reinausbeuten zwischen etwa 70 und 80% d.Th. Diese Ausbeuten liegen deutlich über den Ausbeuten der Verfahren nach dem Stand der Technik (im allgemeinen bis höchstens etwa 60% d.Th.).

Die Verwendung eines kostengünstigen, gefahrlos zu handhabenden Fluorierungsmittels, die Homogenität des Reaktionsgemisches, die daraus resultierenden höheren Ausbeuten, die Möglichkeiten zur Rückgewinnung der Einsatzmaterialien und damit geringe Abwasserbelastung stellen wesentliche Vorteile des erfindungsgemässen Verfahrens gegenüber dem Stand der Technik dar. Ein weiterer nicht unbeträchtlicher Vorteil besteht darin, dass das Verfahren wegen der guten Stabilität der hier verwendeten Fluorierungsmittel in Apparaturen aus Borsilikatglas ohne weiteres und ohne einen besonderen Aufwand ausführbar ist. Das Verfahren stellt daher einen erheblichen Fortschritt dar.

Das folgende Beispiel soll der weiteren Erläuterung der Erfindung dienen.

*Beispiel:*

*a) Herstellung des Schwefeltetrafluorids:*
In einer Rührapparatur aus Borsilikatglas mit Sole-Rückflusskühler (−40°C) legt man unter wasserfreien Bedingungen eine Lösung von 644 g Triäthylamin-trishydrofluorid in 500 g Acetonitril vor und tropft unter Aussenkühlung mit Eiswasser 309 g Schwefeldichlorid bei 5 bis 10°C zu. Man rührt etwas nach und zieht anschliessend bei gleichbleibender Temperatur das rohe Schwefeltetrafluorid bei zuerst schwachem, dann langsam verbessertem Vakuum (Endvakuum 15-20 mbar) durch den Rückflusskühler in einen von aussen mit flüssigem Stickstoff gekühlten Kolben, der anschliessend auch als Destillationsblase verwendet werden kann. Nach dem Ende der Gasentwicklung folgt eine Tieftemperaturdestillation aus diesem Kolben bei Normaldruck durch eine Kolonne mit Füllkörpern aus Borsilikatglas. Die zwischen −39 und −36°C siedende Fraktion ist farblos und wiegt ca. 80 g, was 74% d.Th. entspricht.

*b) Rückgewinnung von eingesetztem Material (wenn gewünscht):*
Der Rückstand der Tieftemperaturdestillation (ca. 10 g) wird mit dem Reaktionsrückstand vereinigt und dieser in einer geeigneten Apparatur bei Raumtemperatur und Vakuum bis ca. 2 mbar soweit wie möglich eingeengt. Das sich in der gekühlten Vorlage sammelnde zweiphasige Kondensat wird anschliessend getrennt; die leichte Phase (ca. 600 g) wird nach titrimetrischer Bestimmung des enthaltenen Fluorwasserstoffs mit den berechneten Mengen an Acetonitril und Triäthylamin-trishydrofluorid (oder wahlweise Fluorwasserstoff und Triäthylamin) versetzt und für den nächsten Ansatz verwendet. Die schwere Phase des Kondensats besteht neben wenig Schwefeldichlorid hauptsächlich aus Dischwefeldichlorid, welches, evtl. nach vorheriger destillativer Abtrennung, zu Schwefeldichlorid chloriert werden kann. Der Eindampfrückstand wird mit ausreichend Calciumhydroxid und Wasser versetzt, das sich abscheidende Triäthylamin wird abdestilliert und nach Trocknung wiederverwendet (ca. 350 g).

## Patentansprüche

1. Verfahren zur Herstellung von Schwefeltetrafluorid durch Umsetzung von Schwefeldichlorid mit einem Amin-polyhydrofluorid in einem inerten aprotischen Lösungsmittel, dadurch gekennzeichnet, dass man als Amin-polyhydrofluorid ein Trishydrofluorid eines tertiären Amins der allgemeinen Formel I verwendet:

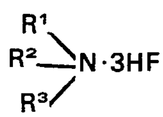

(I)

worin $R^1$, $R^2$ und $R^3$ unabhängig voneinander = $(C_1$-$C_{10})$-Alkyl, $(C_3$-$C_7)$-Cycloalkyl oder $(C_7$-$C_{10})$-Aralkyl, wobei 2 dieser Reste $R^1$, $R^2$ und $R^3$ zusammen auch eine — gegebenenfalls durch Heteroatome (hauptsächlich O und/oder S) unterbrochene — Alkylengruppe mit 4 bis 6 C-Atomen in der Kette bilden können.

2. Verfahren nach Anspruch 1, dadurch gekennzeichnet, dass man solche Verbindungen der Formel I verwendet, bei denen $R^1$, $R^2$ und $R^3$ gleiche oder verschiedene $(C_1$-$C_4)$-Alkylgruppe oder 2 dieser Reste zusammen eine Alkylengruppe mit 5 C-Atomen in der Kette und der übrige Rest eine $(C_1$-$C_4)$-Alkylgruppe bedeuten.

3. Verfahren nach den Ansprüchen 1 oder 2, dadurch gekennzeichnet, dass man als Trishydrofluorid eines tertiären Amins Triäthylamin-trishydrofluorid verwendet.

4. Verfahren nach den Ansprüchen 1 bis 3, dadurch gekennzeichnet, dass man die Umsetzung durch Zugabe des Schwefeldichlorids in die — gegebenenfalls *in situ* durch Eintropfen der berechneten Menge des jeweiligen tertiären Amins in eine Lösung von Fluorwasserstoff in einem aprotischen Lösungsmittel, vorzugsweise in Acetonitril, hergestellte — Lösung des tertiären Amin-trishydrofluorids ausführt.

5. Verfahren nach den Ansprüchen 1 bis 4, dadurch gekennzeichnet, dass man die Umsetzung bei Temperaturen zwischen −10 und +25°C, vorzugsweise zwischen 0 und +15°C, insbesondere zwischen +5 und +10°C, durchführt.

## Claims

1. A process for preparing sulfur tetrafluoride by

reacting sulfur dichloride with an amine polyfluorhydrate in an inert aprotic solvent, which comprises using as an amine polyfluorhydrate a trisfluorhydrate of a tertiary aliphatic amine of the formula I

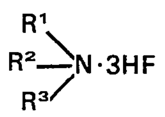 (I)

wherein $R^1$, $R^2$ and $R^3$, independent of each other, represent $C_1$-$C_{10}$alkyl, $C_3$-$C_7$cycloalkyl or $C_7$-$C_{10}$aralkyl, two of these radicals $R^1$, $R^2$ and $R^3$ forming optionally together an alkylene group with from 4 to 6 carbon atoms in the chain, which may be interrupted by heteroatoms, mainly O and/or S.

2. The process of claim 1, which comprises using compounds of the formula I, wherein $R^1$, $R^2$ and $R^3$ represent identical or different $C_1$-$C_4$alkyl groups or wherein 2 of these radicals represent together an alkylene group with 5 carbon atoms in the chain and the remaining radical represents $C_1$-$C_4$alkyl.

3. The process of claims 1 or 2, which comprises using as a trisfluorhydrate of a tertiary amine triethylamine trisfluorhydrate.

4. The process of claims 1 to 3, which comprises carrying out the reaction by adding sulfur dichloride into the solution of the tertiary amine trisfluorhydrate, optionally prepared *in situ* by dropping the calculated quantity of the respective tertiary amine into a solution of hydrogen fluoride in an aprotic solvent, preferably in acetonitrile.

5. The process of claims 1 to 4, which comprises carrying out the reaction at a temperature of from −10 to +25°C, preferably 0 to +15°C, particularly +5 to +10°C.

**Revendications**

1. Procédé de préparation du tétrafluorure de soufre par réaction du dichlorure de soufre avec un polyfluorhydrate d'amine, dans un solvant aprotique inerte, procédé caractérisé en ce qu'on utilise, comme polyfluorhydrate d'amine, un trisfluorhydrate d'amine aliphatique tertiaire répondant à la formule générale I

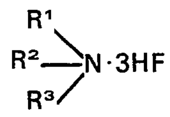 (I)

dans laquelle $R^1$, $R^2$ et $R^3$ représentent chacun, indépendamment les uns des autres, un radical alkyle en $C_1$-$C_{10}$, un radical cycloalkyle en $C_3$-$C_7$ ou un radical aralkyle en $C_7$-$C_{10}$, deux d'entre eux pouvant également former ensemble un radical alkylène contenant de 4 à 6 atomes de carbone dans la chaîne et éventuellement interrompu par des hétéro-atomes, surtout par O et/ou S.

2. Procédé selon la revendication 1, caractérisé en ce qu'on utilise des composés de formule I dans lesquels $R^1$, $R^2$ et $R^3$ représentent des radicaux alkyles en $C_1$-$C_4$, identiques ou différents, ou deux de ces symboles représentent ensemble un radical alkylène à 5 atomes de carbone dans la chaîne, le symbole restant représentant un radical alkyle en $C_1$-$C_4$.

3. Procédé selon l'une des revendications 1 ou 2, caractérisé en ce qu'on utilise, comme trisfluorhydrate d'amine tertiaire, le trisfluorhydrate de la triéthylamine.

4. Procédé selon l'une quelconque des revendications 1 à 3, caractérisé en ce qu'on effectue la réaction en ajoutant le dichlorure de soufre à une solution du trisfluorhydrate d'amine tertiaire, que l'on a éventuellement préparé *in situ* par addition goutte à goutte de la quantité calculée de l'amine tertiaire correspondante à une solution de fluorure d'hydrogène dans un solvant aprotique, de préférence dans l'acétonitrile.

5. Procédé selon l'une quelconque des revendications 1 à 4, caractérisé en ce qu'on effectue la réaction à des températures comprises entre −10 et +25°C, de préférence entre 0 et + 15°C, plus spécialement entre +5 et +10°C.